# EUROPEAN PATENT SPECIFICATION

(11) **EP 0 705 756 B1**
(45) Date of publication and mention of the grant of the patent: **18.06.1997**
(21) Application number: 95113709.0
(22) Date of filing: 31.08.1995
(51) Int. Cl.: B62J 15/00

(54) **Front fender of motor-bicycle**
Schutzblech für das Vorderrad eines Motorrades
Garde-boue avant de motocyclette

(30) Priority: 03.10.1994 JP 264568/94
(43) Date of publication of application: 10.04.1996
(73) Proprietor: HONDA GIKEN KOGYO KABUSHIKI KAISHA, Minato-ku Tokyo (JP)
(72) Inventor: Nishimoto, Kenichi, c/o KK Honda Gijutsu Kenkyusho, Wako-shi, Saitama (JP); Hagiwara, Shinji, c/o K.K. Honda Gijutsu Kenkyusho, Wako-shi, Saitama (JP); Hoshi, Konomu, c/o K.K. Honda Gijutsu Kenkyusho, Wako-shi, Saitama (JP)
(74) Representative: Liska, Horst, Dr.-Ing.

(56) References cited:
- EP-A- 0 462 511
- DE-A- 3 831 793
- FR-A- 2 557 532
- US-A- 4 458 909

## Description

### Detailed Description of the Invention

### Applicable Industrial Field

The present invention relates to a front fender of a motor-bicycle which is excellent in an aerodynamic characteristic.

### Prior Art

A front fender of a motor-bicycle is a member having an approximately semi-circular section, and it covers the upper side of a front wheel for preventing the rearward scattering of mud spattered by the front wheel.

Japanese Utility Model Publication No. SHO 59-15750 and Japanese Patent Laid-open No. HEI 2-254082 disclose a technique wherein a protective member is provided for protecting a front fork from being damaged by a flying stone or the like and for suppressing an increase in air resistance due to the front fork.

Japanese Utility Model Laid-open No.SHO 59-177518 discloses a technique, wherein a rectifying plate is provided for introducing running wind to an engine, and the front surface side of a front fork is covered with the front end of the rectifying plate.

DE-A-38 31 793 discloses a front fender for a motor-bicycle according to the preamble of claim 1, wherein the front fender is adapted to an aerodynamic optimized complete fairing of the motor-bicycle.

### Problem to be Solved by the Invention

A running performance can be improved using a front fender as a member for enhancing an aerodynamic characteristic. For this purpose, the front fender may be enlarged in size to reduce an air resistance. Moreover, by provision of guide plates projecting sideward at the back of the front fender, the torque control of a steering system can be performed.

However, in the case where the front fender is simply enlarged in size, a flow of air is disturbed on the leading edge side of the front fender, so that the flow of air colliding with the guide plates is weakened, thus failing to desirably perform the torque control of the steering system. Accordingly, it is most preferable that an air resistance is reduced using the front fender while the torque control of the steering system is ensured.

Such a front fender, however, has been never known. In either of the above-described prior arts, the front fender itself is not provided with any structure for reducing an air resistance, and it is naturally intended to perform the torque control of the steering system. An object of the present invention is to satisfy the above-described requirements.

### Means for Solving the Problem

To achieve the above object, according to the present invention, there is provided a front fender for a motor-bicycle mounted on a front fork thereof for covering the upper side of a front wheel, said front fender forming a three dimensional curved surface and having a front portion projecting forwardly from the front forked portions, characterized in that said front fender forms a three dimensional curved surface by having at least side portions of said front portion extending outward and sideward and by having at least right and left lower ends of said side portion bent inwardly.

### Function

A front fender is enlarged in size to give an effect on an aerodynamic characteristic, and further it forms a three-dimensional curved surface in which right and left lower ends of at least a portion of the front fender projecting from a front fork are bent inwardly. With this arrangement, a rectifying surface of the front fender is enlarged even on the bottom side and the rectifying area is increased, so that a flow of air along the front fender is intensified and the air resistance is reduced by the three-dimensional curved surface of the front fender, thus improving the aerodynamic characteristic. Moreover, upon steering at a steering angle, a change in air pressure is made gentle by the effect of the three-dimensional curved surface.

### Effect of the invention

A front fender forms a three-dimensional curved surface in which the right and left ends of at least a portion of a front fender projecting from front forked portions are curved inwardly. With this three-dimensional curved surface, a smooth flow of air can be formed, to reduce the air resistance, thus improving the aerodynamic characteristic. Moreover, since the rectifying area is increased, a strong flow of air for torque control of a steering system can be formed.

In the above front fender, guide plates running approximately along the axial direction of the front fork and projecting outward and sideward may be provided. The guide plates may be provided on the front fender side by fixing them on a front fork or forming them integrally with the front fender.

With the arrangement of guide plates running approximately along the axial line of the front fork and projecting outward and sideward and provided together with the front fender, an integral flow of air is formed by the front fender and the guide plates on the vehicular body side, to thereby reduce an air resistance.

Moreover, the flow of air flowing to the guide plates along the front fender is intensified. As a result, upon steering at a steering angle, a starting torque is reduced by the guide plates, and a change in air pressure is made gentle by the effect of the three-dimensional curved surface of the front fender, thus stabilizing the torque control of the steering system.

Since guide plates running approximately along the axial line of a front fork and projecting sideward are provided, an integral flow of air is formed by the front fender and the guide plates on the vehicular side, thus further reducing the air resistance.

A starting torque is reduced upon steering at a steering angle by the guide plates projecting sideward, and a change in the air flow is made gentle by the presence of the three-dimensional curved surface of the front fender, so that the torque control of a steering system can be easily stabilized.

Moreover, openings for escaping air entrapped inside the front fender may be provided on the side portions of the front fender. The positions of the openings may be set such that air after passing through the openings directly collide with the guide plates positioned on the rear side.

Since opening portions for communicating the inside and outside of the front fender to each other are formed in the side portions of the front fender, a difference in air pressure between the inside and outside of the front fender is reduced upon steering, and the torque control of the steering system can be further stabilized.

By setting the position of each opening portion such that air passing through the opening portion directly collides with the guide plate, the flow of air can be introduced to the guide plate irrespective of the shape of the front portion of the front fender, to thereby further stabilize the torque control of the steering system.

### Brief Description of the Drawings

Fig. 1 A perspective view of a motor-bicycle used in embodiments of the present invention, as seen from the right side.

Fig. 2 A right side view of Fig. 1.

Fig. 3 A front view of Fig. 1.

Fig. 4 An enlarged sectional view taken along line 4-4 of Fig. 2.

Fig. 5 An enlarged perspective view showing an essential portion of a first embodiment.

Fig. 6 A view showing the function of a front fender.

Fig. 7 A perspective view showing an essential portion of a second embodiment.

Fig. 8 An enlarged perspective view showing an essential portion of a modification of the second embodiment.

Fig. 9 A perspective view showing an essential portion of a third embodiment.

Fig. 10 A perspective view showing an essential portion of a fourth embodiment.

### Embodiment

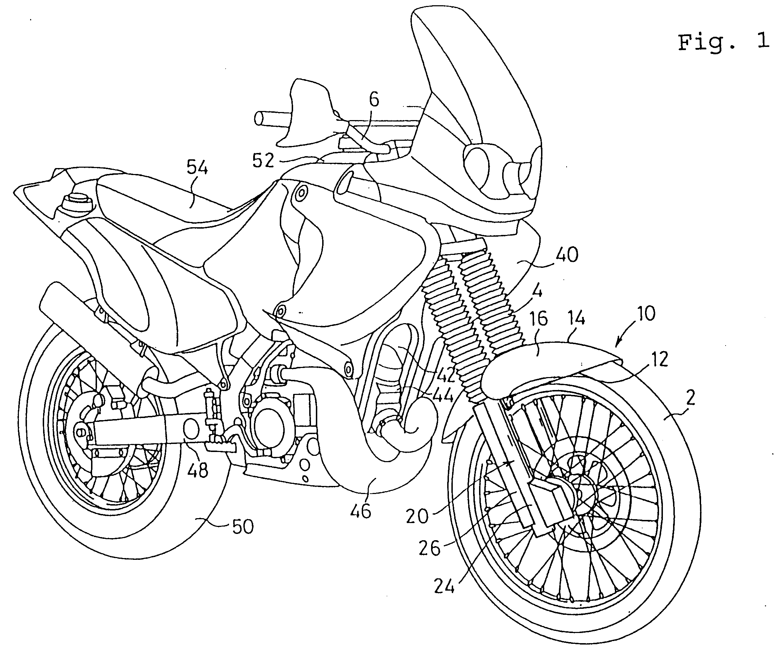

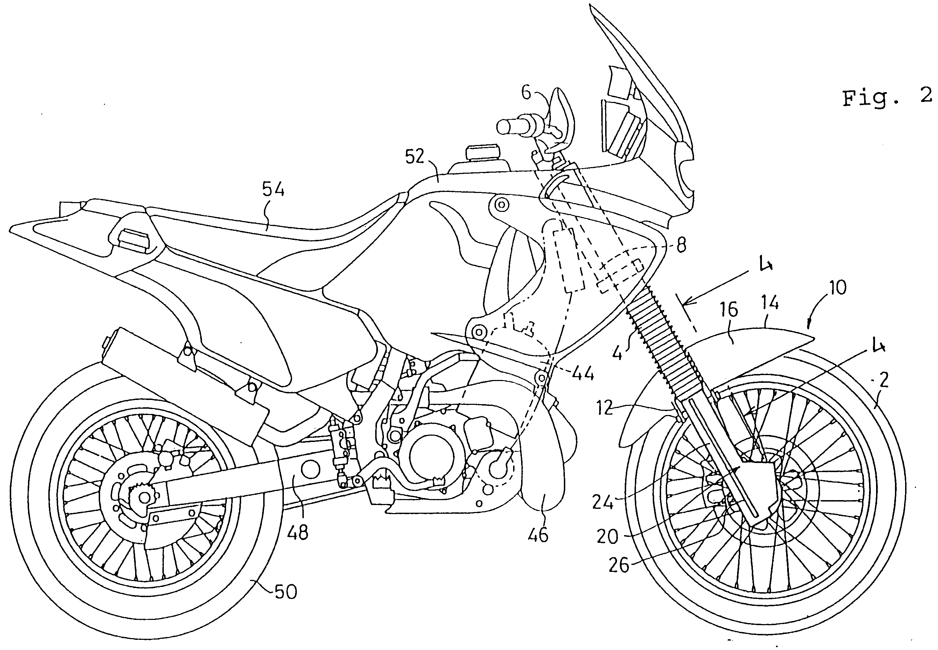

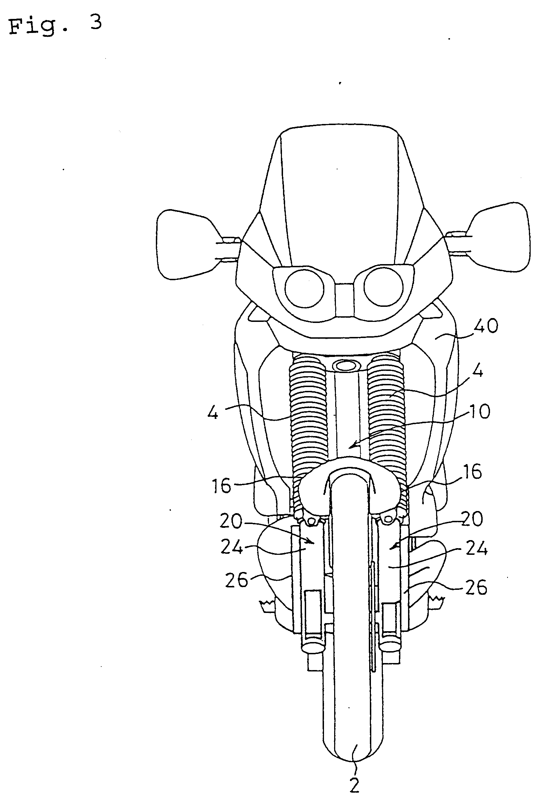

Hereinafter, embodiments of the present invention will be described with reference to Figs. 1 to 10. Fig. 1 is a perspective view of a motor-bicycle used in this embodiment, as seen from the right and forward side; and Figs. 2 and 3 are a right side view and a front view of the motor-bicycle shown in Fig. 1, respectively.

In these figures, the upper end portions of a pair of right and left telescopic type front forked portions 4 for supporting a front wheel 2 are mounted on a steering shaft 8 (see Fig. 2) provided with a handle 6.

The upper side of the front wheel 2 is covered with a front fender 10. An intermediate portion of the front fender 10 has mounting portions 12, which are mounted on the front forked portions 4 by means of bolts or the like.

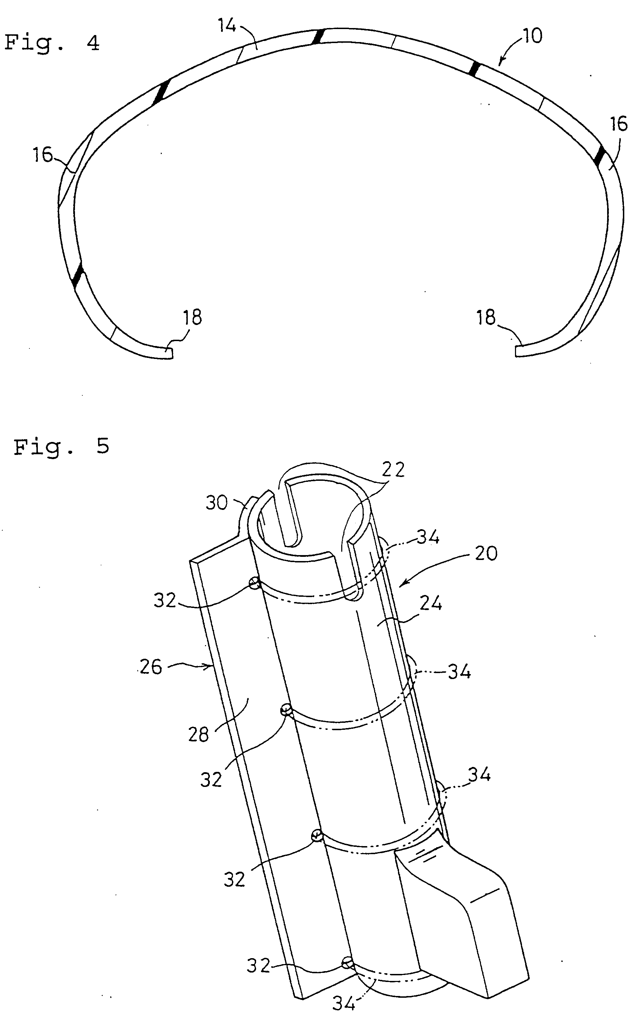

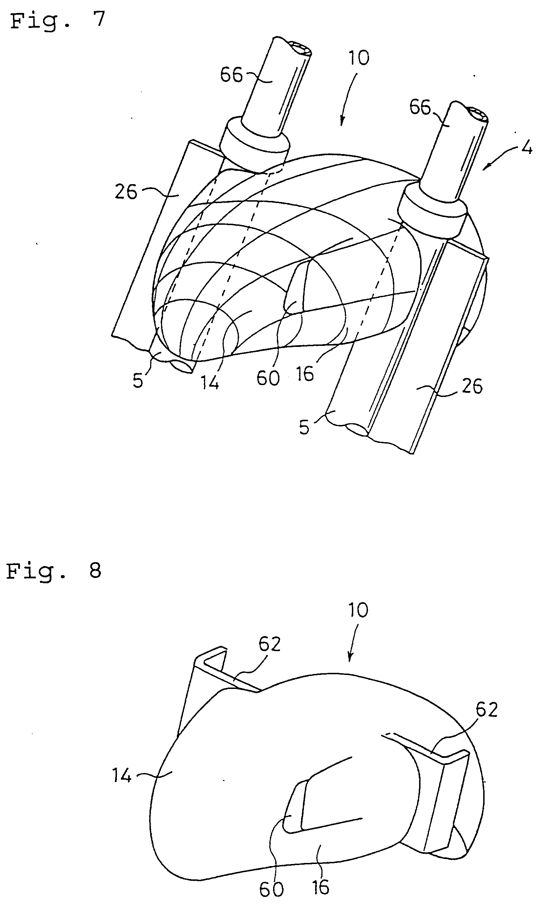

Fig. 4 is an enlarged sectional view taken along line 4-4 of Fig. 2. As is apparent from this figure, the front fender 10 is formed in a relatively large shape to give an effect on the aerodynamic characteristic. The front fender 10 forms a three-dimensional curved surface by a method wherein at least side portions 16 of a front portion 14 projecting forwardly from the front forked portions 4 are curved to be extended outward and sideward, and right and left lower end portions 18 are curved inwardly (see a wiring diagram of Fig. 7). The lower end portion 18 may be variously bent, for example, curled at the leading edge.

A bottom case 20 for covering an outer pipe of each front forked portion 4 is provided around a lower half of the front forked portion 4 on each side of the front wheel 2. As shown in Fig. 5, the bottom case 20 has a cylindrical portion 24 having longitudinal slits 22 and a guide plate 26 mounted along the side surface of the cylindrical case 24.

The guide plate 26, which is made of a suitable material such as carbon fiber, includes an extension portion 28 extending radially outwardly from the cylindrical portion 24 and having a length being approximately equal to the whole length of the bottom case 20, and a mounting portion 30 mounted on the back surface of the cylindrical portion 24 using a suitable means such as adhesive.

Holes 32 are formed in the extension portion 28 at suitable intervals. The cylindrical portion 24 is mounted around the bottom case 20 by a suitable means such as wire members 34 which pass through the holes 32. However, the mounting structure of the cylindrical portion 24 is not limited to this case, and it may be constituted of the other manner.

In Fig. 1, reference numeral 40 is a front cover; 42 is an opening portion formed under the front surface of the front cover; 44 is a two-cycle engine; 46 is an exhaust pipe; 48 is a rear swing arm; 50 is a rear wheel, 52 is a fuel tank; and 54 is a seat.

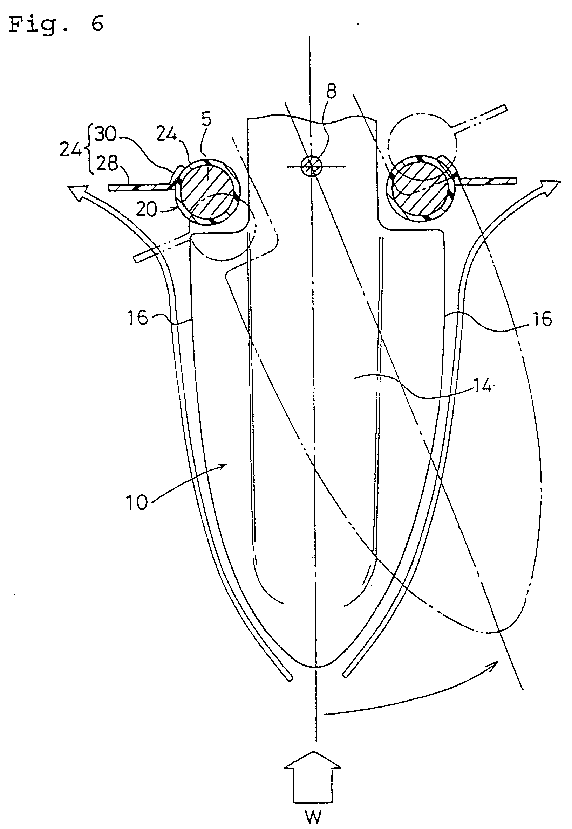

The function of this embodiment will be described below. Fig. 6 is a view showing the function of the front fender 10, as seen from the axial line of the steering shaft 8. In this figure, a running wind W collides with the front fender 10, and is then divided in the right and left along the side portions 16 of the front portion 14. Each divided component of the running wind W flows rearward and is further curved outward and sideward by the presence of the guide plate 26.

At this time, with respect to the flow of the running wind W, the air resistance is reduced by a rectifying effect of the three-dimensional curved surface at the front portion 14 of the front fender 10 formed in a large shape. As a result, the running wind smoothly flows along the front fender 10.

The smooth and strong flow of air by the effect of the front fender 10 is smoothly introduced to the guide plate 26 on the rear side and collides therewith, so that the air resistance can be reduced by the integrated effect of the front fender 10 and the body side.

Moreover, upon steering at a steering angle, a starting torque is reduced by the guide plates 26 and a change in air flow is made gentle by the three-dimensional curved surface at the front portion 14 of the front fender 10, thus stabilizing the torque control of a steering system.

In addition, at the front portion 14 of the front fender 10, the right and left end portions are directed inwardly and thereby even the bottom side is formed with a relatively large rectifying surface. Consequently, a smooth and relatively large flow of air is formed even on this bottom side, which is further effective to reduce the air resistance and to stabilize the torque control of the steering system.

Fig. 7 shows a second embodiment, wherein the guide plates 26 are directly mounted on outer pipes 5 of the front fork portions 4, respectively, and opening portions 60 for communicating the inside and outside of the front fender to each other are formed in the side portions 16 of the front fender 10. When a difference in air pressure is generated between the inside and outside of the front fender 10 upon steering, the air pressure is allowed to be escaped from the opening portions 60, to lower the difference in the air pressure, thus stabilizing the torque control of a steering system.

At this time, the position of each opening portion 60 is set such that the air after passing through the opening portion 60 directly collides with the guide plate 26 provided on the rear side. With this arrangement, behind the opening 60, a strong flow of air flowing toward the guide plate 26 provided on the rear side along the front fender 10 can be formed by the air after passing through the opening portion 60. This is advantageous in the case where air is difficult to collide with the guide plate 26 by the presence of the portion of the front fender 10 in front of the opening portion 60.

In addition, the structure of the three-dimensional curved surface in the front fender 10 is the same as that of the above-described embodiment; however, for easy understanding of the three-dimensional curved surface, it is particularly shown by the wiring diagram. The following embodiments shown in Figs. 8 to 10 have the same three-dimensional curved surface; however, the wiring diagram thereof is omitted.

Fig. 8 shows an example where guide plates 62 are formed integrally with the side portions of the front fender 10 for reducing the number of parts.

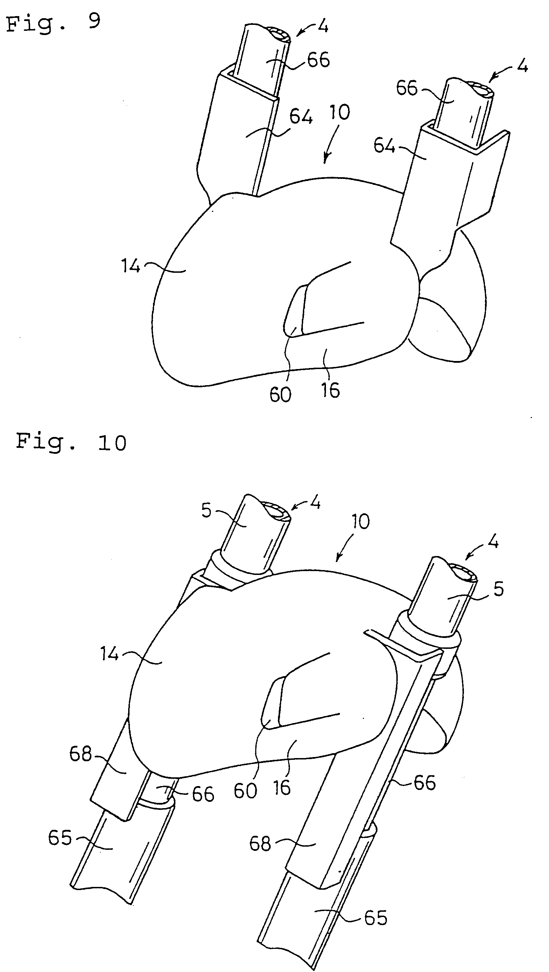

Fig. 9 shows a third embodiment, wherein guide plates 64 are also formed integrally with the front fender 10; however, the guide plates 64 extend upwardly for serving as chipping guards for covering annular pipes 66 of the front fork portions 4.

Fig. 10 shows a fourth embodiment, wherein guide plates 68 serving as chipping guards are also provided, but the front fork portions 4 are vertically reversed, that is, the outer pipes 5 are positioned on the upper side and the inner pipes 66 are positioned on the lower side; and accordingly, the guide plates 68 extend downwardly to the upper side of the bottom cases 65.

## Claims

1. A front fender for a motor-bicycle mounted on a front fork thereof for covering the upper side of a front wheel (2), said front fender (10) forming a three dimensional curved surface and having a front portion (14) projecting forwardly from the front forked portions (4), characterized in that said front fender forms a three dimensional curved surface by having at least side portions (16) of said front portion (14) extending outward and sideward and by having at least right and left lower ends (18) of said side portion (16) bent inwardly.

2. A front fender of a motor-bicycle according to claim 1, wherein guide plates (26) running approximately along the axial direction of said front fork and projecting outward and sideward are provided.

3. A front fender of a motor-bicycle according to claim 2, wherein said guide plates (26) are fixed on said front fork.

4. A front fender of a motor-bicycle according to claim 2, wherein said guide plates (26) are formed integrally with said front fender (10).

5. A front fender of a motor-bicycle according to any of claims 1 to 4, wherein openings (60) for escaping air entrapped inside said front fender (10) are provided on the side portions (16) of said front fender (10).

6. A front fender of a motor-bicycle according to claim 5, wherein the positions of said openings (60) are set such that air after passing through said openings (60) directly collide with said guide plates (26) which project sideward and are positioned on the rear side.

## Patentansprüche

1. Vordere Schutzabdeckung für ein Motorrad, welche an einer Vordergabel desselben angebracht ist, um die Oberseite eines Vorderrads (2) abzudecken, wobei die vordere Schutzabdeckung (10) eine dreidimensional gekrümmte Fläche bildet und einen Vorderabschnitt (14) aufweist, welcher von den Vordergabelabschnitten (4) nach vorne vorsteht,
**dadurch gekennzeichnet,**
daß die vordere Schutzabdeckung dadurch eine dreidimensional gekrümmte Fläche bildet, daß sie wenigstens Seitenabschnitte (16) des Vorderabschnitts (14) aufweist, welche sich nach außen und zur Seite erstrecken und wenigstens rechte und linke untere Enden (18) des Seitenabschnitts (16) aufweist, welche nach innen gebogen sind.

2. Vordere Schutzabdeckung eines Motorrads nach Anspruch 1, wobei Führungsplatten (26) vorgesehen sind, welche annähernd entlang der axialen Richtung der Vordergabel verlaufen und nach außen und zur Seite vorstehen.

3. Vordere Schutzabdeckung eines Motorrads nach Anspruch 2, wobei die Führungsplatten (26) an der Vordergabel befestigt sind.

4. Vordere Schutzabdeckung eines Motorrads nach Anspruch 2, wobei die Führungsplatten (26) mit der vorderen Schutzabdeckung (10) integral ausgebildet sind.

5. Vordere Schutzabdeckung eines Motorrads nach einem der Ansprüche 1 bis 4, wobei Öffnungen (60) zum Auslaß von im Inneren der vorderen Schutzabdeckung (10) eingefangener Luft an den Seitenabschnitten (16) der vorderen Schutzabdeckung (10) vorgesehen sind.

6. Vordere Schutzabdeckung eines Motorrads nach Anspruch 5, wobei die Positionen der Öffnungen (60) derart festgelegt sind, daß Luft nach Durchgang durch die Öffnungen (60) direkt mit den Führungsplatten (26) kollidiert, welche zur Seite vorstehen und an der Rückseite angeordnet sind.

## Revendications

1. Garde-boue avant pour un cyclomoteur, monté sur une fourche avant de celui-ci pour recouvrir le côté supérieur d'une roue avant (2), ledit garde-boue avant (10) formant une surface incurvée tridimensionnelle et ayant une partie avant (14) faisant saillie vers l'avant depuis les parties de fourche avant (4), caractérisé en ce que ledit garde-boue avant forme une surface incurvée tridimensionnelle en ayant au moins des parties latérales (16) de ladite partie avant (14) s'étendant vers l'extérieur et vers le côté, et en ayant au moins des extrémités inférieures droite et gauche (18) de ladite partie latérale (16) recourbées vers l'intérieur.

2. Garde-boue avant d'un cyclomoteur selon la revendication 1, dans lequel sont prévues des plaques de guidage (26) s'étendant approximativement suivant la direction axiale de ladite fourche avant et faisant saillie vers l'extérieur et vers le côté.

3. Garde-boue avant d'un cyclomoteur selon la revendication 2, dans lequel lesdites plaques de guidage (26) sont fixées à ladite fourche avant.

4. Garde-boue avant d'un cyclomoteur selon la revendication 2, dans lequel lesdites plaques de guidage (26) sont formées de façon monobloc avec ledit garde-boue avant (10).

5. Garde-boue avant d'un cyclomoteur selon l'une quelconque des revendications 1 à 4, dans lequel des ouvertures (60) pour l'échappement de l'air piégé à l'intérieur dudit garde-boue avant (10) sont prévues sur les parties latérales (16) dudit garde-boue avant (10).

6. Garde-boue avant d'un cyclomoteur selon la revendication 5, dans lequel les positions desdites ouvertures (60) sont fixées de telle façon que l'air, après qu'il est passé à travers lesdites ouvertures (60), entre directement en collision avec lesdites plaques de guidage (26) qui font saillie sur le côté et sont disposées sur le côté arrière.
